# EUROPÄISCHE PATENTSCHRIFT

(11) **EP 0 875 323 B1**
(45) Veröffentlichungstag und Bekanntmachung des Hinweises auf die Patenterteilung: **05.12.2001**
(21) Anmeldenummer: 98105765.6
(22) Anmeldetag: 30.03.1998
(51) Int. Cl.: B23D 35/00

(54) **Hartstoffbeschichtung für Messer oder Schneiden**
Hard material coating for knife or blades
Revêtement en matière dure pour couteau ou lames

(30) Priorität: 28.04.1997 AT 73397
(43) Veröffentlichungstag der Anmeldung: 04.11.1998
(73) Patentinhaber: Busatis GmbH, 3251 Purgstall (AT)
(72) Erfinder:
(74) Vertreter: Puchberger, Rolf, Dipl. Ing.

(56) Entgegenhaltungen:
- EP-A- 0 628 379
- GB-A- 2 176 683
- US-A- 5 096 465

## Beschreibung

Die Erfindung betrifft eine Hartstoffbeschichtung für Messer oder Schneiden mit Hartstoffpartikeln sowie mit einer solchen Hartstoffbeschichtung versehene Messer und Schneiden; siehe EP-A 0 628 379.

Für verschiedene Schneideeinrichtungen bei landwirtschaftlichen Erntemaschinen, insbesondere bei Häckslern, werden heute Messer verwendet, die auf der der schrägen Seite (Wate) gegenüberliegenden Seite eine Hartstoffschicht aufweisen. Die Hartstoffschicht wird mittels thermischem Spritzverfahren in zwei Stufen aufgebracht. In der ersten Stufe wird die Schicht aufgespritzt und in einer zweiten Stufe wird durch Sintern (Schmelzverbinden) die Festigkeit der Schicht erhöht. Die Schicht besteht aus einer Metallmatrix und eingelagerten Hartstoffen, insbesondere Wolframkarbiden. Dabei ist der HV-Wert für die Karbidhärte zwei bis dreimal so groß wie jener der Matrixhärte, die in etwa der Härte des Grundmaterials im Bereich der Schneide entspricht.

Durch den Härteunterschied zwischen der Hartstoffschicht und dem Grundmaterial ergibt sich im Schneideeinsatz ein unterschiedlicher Verschleiß, das weichere Grundmaterial verschleißt schneller als die Beschichtung. Dadurch entsteht durch eine vorstehende Schneidkante der Beschichtung ein sogenannter Selbstschärfeffekt.

Aufgrund der ständig steigenden Leistungsfähigkeit der Maschinen reicht der vorhandene Verschleißwiderstand der Schichten nicht mehr aus. Es wird auch die Schicht verschlissen und steht nicht mehr über das Grundmaterial vor, dadurch kommt es zu einem Abrunden der Schneidspitzen. Es ist also notwendig, den Verschleißwiderstand der Schicht zu erhöhen.

Dies wird erfindungsgemäß dadurch erreicht, daß die Hartstoffpartikel in der eingangs genannten Hartstoffbeschichtung einen Durchmesser von 40 bis 100 *µ*m aufweisen und in einem Matrixmaterial eingebettet sind. Körner dieser Größe verleihen der Hartstoffbeschichtung, obwohl sie zwischen den Hartstoffpartikeln Bereiche mit wesentlich geringerer Härte hat, eine resultierende Härte, die der Härte der Hartstoffpartikel entspricht, und damit einen sehr hohen Verschleißwiderstand. Die Messer bzw. Schneiden mit einer derartigen Hartstoffbeschichtung weisen im Bereich ihrer Schneidkanten höhere Standzeiten auf als Messer bzw. Schneiden gemäß dem Stand der Technik.

Vorzugsweise beträgt der Flächenanteil der Hartstoffpartikel mit einem Durchmesser von 40 bis 100 *µ*m im Schliffbild der Hartstoffbeschichtung mindestens 30%. Dieser Mindestanteil an Hartstoffpartikel sichert insbesondere, wenn, wie vorzugsweise ausgeführt, die Hartstoffpartikel im Matrixmaterial gleichmäßig verteilt sind, daß die Bereiche mit Matrixmaterial zwischen den Hartstoffpartikeln nicht zu groß sind und verhindert damit ein massives Aushöhlen des Matrixmaterials zwischen den Hartstoffpartikeln.

Vorzugsweise ist die Härte der Hartstoffpartikel größer als 1400 HV, so daß die Gesamthärte der Hartstoffbeschichtung in etwa auch diesem Härtewert entspricht und ein den heutigen Bedingungen angepaßter Verschleißwiderstand gegeben ist.

Die Hartstoffpartikel sind vorzugsweise Karbide, Nitride oder Oxide, insbesondere Wolframkarbide.

Vorzugsweise hat das Matrixmaterial eine Härte von 500 bis 800 HV und enthält Nickel und Kobalt oder Nickel-Chrom-Silizium-Verbindungen. Diese Charakteristika für das Matrixmaterial sind an sich bekannt, sind aber auch für den vorliegenden erfindungsgemäßen, strukturellen Aufbau als vorteilhaft anzusehen.

Vorzugsweise ist die erforderliche, optimale Dicke der Hartstoffbeschichtung vom schneidenden Material, vom Anteil und von der Härte der Hartstoffpartikel, der Matrixhärte und der abnutzbaren Beschichtungsbreite abhängig und beträgt bei Häckslern in der Feldfruchternte vorzugsweise:
- bei Maismessern mindestens 0,1 bis höchstens 0, 2 mm,
- bei Gras-(und anderen Pflanzen zur Silage)messern mindestens 0,3 bis höchstens 0, 5 mm,
- bei Gegenschneiden in der Maisernte mindestens 0,6 bis höchstens 1,5 mm.

Durch die Kombination der erfindungsgemäßen Struktur der Hartstoffbeschichtung mit der bevorzugten Dicke erreichen die mit der Hartstoffbeschichtung versehenen Messer und Schneiden Standzeiten, die für moderne landwirtschaftliche Maschinen bestens geeignet sind.

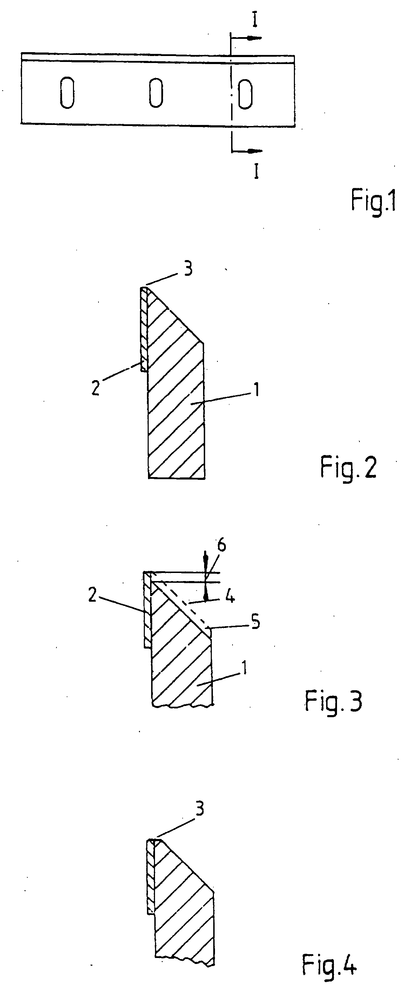

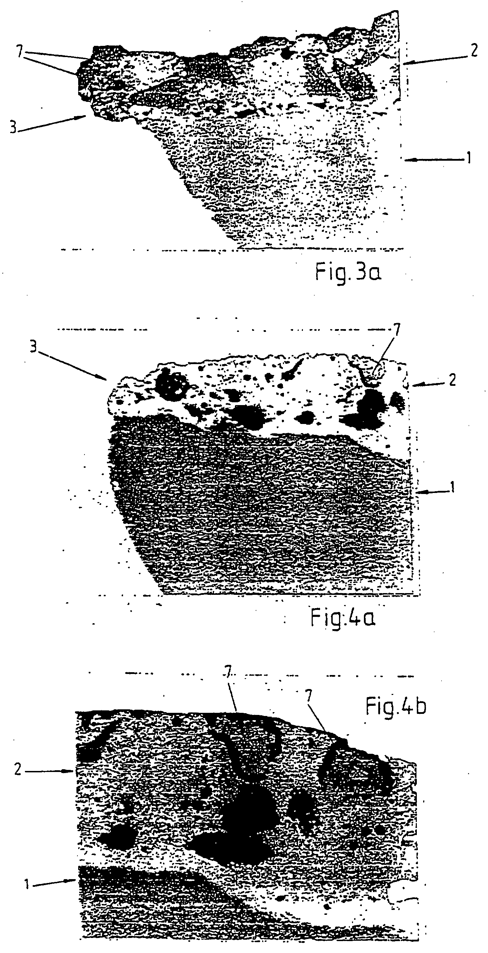

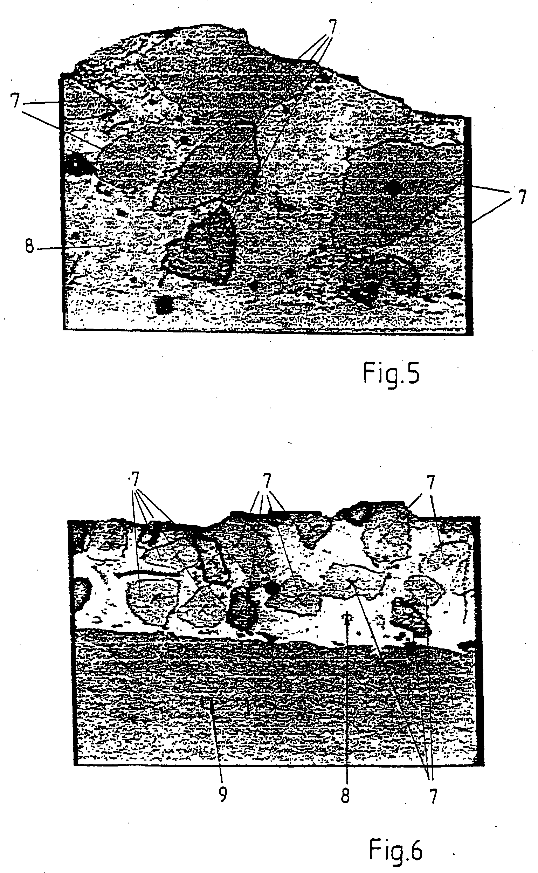

Die Erfindung soll nun anhand der beiliegenden Zeichnungen näher erläutert werden. Dabei zeigt Fig. 1 ein Beispiel eines Häckselmessers; Fig. 2 einen Schnitt entsprechend der Linie I-I in Fig. 1; Fig. 3 zeigt den Schnitt entsprechend Fig. 2 eines bereits gebrauchten Messers mit ausreichend harter Beschichtung; Fig. 3a ist das Schliffbild eines Schnittes gemäß Fig. 3; Fig. 4 zeigt einen Schnitt entsprechend der Fig. 2 eines gebrauchten Messers, bei dem die Beschichtung keine ausreichende Härte aufweist; die Fig. 4a zeigt ein Schliffbild des Schnittes aus Fig. 4; Fig. 4b ist ein Detail aus Fig. 4a; die Fig. 5 zeigt ein Schliffbild einer Hartstoffbeschichtung gemäß der Erfindung; die Fig. 6 zeigt ein Messer mit einer Hartstoffbeschichtung gemäß der Erfindung.

Das Häckselmesser besteht aus einem Grundkörper 1 aus Grundmaterial und einer Hartstoffbeschichtung 2, die die Schneidkante 3 aufweist. Im Bereich der Beschichtung 2 ist das Grundmaterial des Grundkörpers 1 gehärtet. In Fig. 3 sieht man den Verschleiß des Grundmaterials von der ursprünglichen Kontur 4 auf die Kontur 5, wodurch die Beschichtung 2 um die Distanz 6 über den Grundkörper 1 vorsteht.

Die Fig. 3a zeigt das Vorstehen der Beschichtung 2 über den Grundkörper 1 in einem Schliffbild. An der vorstehenden Spitze der Beschichtung 2 erkennt man zwei Karbide 7, die dem Verschleiß der Beschicht 2 Widerstand leisten und dadurch der gesamten Beschichtung 2 eine Härte erteilen, die jener der Karbide entspricht.

Die Fig. 4 zeigt den Verschleißverlauf an der Schneidkante 3, wenn der Verschleißwiderstand der Beschichtung 2 zu gering ist.

Die Fig. 4a zeigt diesen Verlauf nochmals in einem Schliffbild. In der Fig.4a ist auch ersichtlich, daß in der Beschichtung 2 nur ganz vereinzelt erhaltene kompakte Karbide vorhanden sind. Das Grundmaterial des Grundkörpers 1 und das Matrixmaterial der Beschichtung 2 haben in etwa die gleiche Härte, so daß sich die Schneidkante 3 abrundet.

In der Detailabbildung der Fig. 4b sieht man, daß nur mehr zwei größere Karbide 7 erhalten sind, während sich die anderen in kleine Teile aufgelöst in der Schicht 2 befinden. Die schwarzen Flecken in den Schliffbildern sind Poren.

Deutlich erkennt man die Strukturunterschiede zwischen dem Schliffbild einer Beschichtung des Standes der Technik (Fig. 4a) und den Schliffbildern der Beschichtung gemäß der Erfindung, die in Fig. 5 und Fig. 6 dargestellt ist. In der Beschichtung gemäß Fig. 5 und 6 ist ein hoher Anteil großer kompakter Karbide 7 in das Matrixmaterial 8 eingebettet. Das Grundmaterial des Messers ist mit 9 bezeichnet. Die Härte der Beschichtung 2 ergibt sich aus den am Rand liegenden großen Karbiden 7. Wenn diese Karbide 7 verschlissen oder ausgebrochen sind, wird das umliegende Matrixmaterial 8 durch Verschleiß abgetragen, bis neue Karbidkörner 7 an die Oberfläche treten, die der Schicht wieder die Härte erteilen, die der Härte der Karbide selbst entspricht.

## Patentansprüche

1. Hartstoffbeschichtung für Messer oder Schneiden mit Hartstoffpartikeln, **dadurch gekennzeichnet, daß** diese Hartstoffpartikel (7) einen Durchmesser von 40 bis 100 *µ*m aufweisen und in einem Matrixmaterial eingebettet sind.

2. Hartstoffbeschichtung nach Anspruch 1, **dadurch gekennzeichnet, daß** der Flächenanteil dieser Hartstoffpartikel (7) mit einem Durchmesser von 40 bis 100 *µ*m im Schliffbild der Hartstoffbeschichtung (2) mindestens 30% beträgt.

3. Hartstoffbeschichtung nach Anspruch 1 oder 2, **dadurch gekennzeichnet, daß** die Hartstoffpartikel (7) mit einem Durchmesser von 40 bis 100 *µ*m im Matrixmaterial (8) gleichmäßig verteilt sind.

4. Hartstoffbeschichtung nach einem der vorhergehenden Ansprüche, **dadurch gekennzeichnet, daß** die Härte der Hartstoffpartikel (7) größer als 1400 HV ist.

5. Hartstoffbeschichtung nach einem der vorhergehenden Ansprüche, **dadurch gekennzeichnet, daß** die Hartstoffpartikel Karbide, Nitride oder Oxide, vorzugsweise Wolframkarbide, sind.

6. Hartstoffbeschichtung nach einem der vorhergehenden Ansprüche, **dadurch gekennzeichnet, daß** das Matrixmaterial (8) eine Härte von 500 bis 800 HV hat.

7. Hartstoffbeschichtung nach einem der vorhergehenden Ansprüche, **dadurch gekennzeichnet, daß** die Matrix (8) Nickel oder Kobalt oder Nickel-Chrom-Silizium-Verbindungen enthält.

8. Hartstoffbeschichtung nach einem der vorhergehenden Ansprüche, **dadurch gekennzeichnet, daß** die erforderliche, optimale Dicke der Schicht vom zu schneidenden Material, vom Anteil und von der Härte der Hartstoffpartikel, der Matrixhärte und der abnutzbaren Beschichtungsbreite abhängt und bei Häckslern in der Feldfruchternte vorzugsweise beträgt:
- bei Maismessern mindestens 0,1 bis höchstens 0, 2 mm,
- bei Gras-(und anderen Pflanzen zur Silage)messern mindestens 0,3 bis höchstens 0, 5 mm,
- bei Gegenschneiden in der Maisernte mindestens 0,6 bis höchstens 1,5 mm.

9. Messer bzw. Schneide mit einer Schneidkante, die mit einer Hartstoffbeschichtung gemäß Anspruch 1 versehen ist.

10. Messer bzw. Schneide nach Anspruch 9, **dadurch gekennzeichnet, daß** der Flächenanteil der vorzugsweise gleichmäßig im Matrixmaterial (8) verteilten Hartstoffpartikel (7) (mit einem Durchmesser von 40 bis 100 *µ*m) im Schliffbild der Hartstoffbeschichtung (2) mindestens 30% ist, wobei die Hartstoffpartikel (7) vorzugsweise eine Härte von mindestens 1400 HV haben.

11. Messer bzw. Schneide nach Anspruch 9 oder 10, **dadurch gekennzeichnet, daß** die Hartstoffpartikel Karbide, Nitride oder Oxide, vorzugsweise Wolframkarbide, sind.

## Claims

1. Hard material coating for cutters or blades, having hard material particles, **characterized in that** these hard material particles (7) have a diameter of 40 to 100 µm and are embedded in a matrix material.

2. Hard material coating according to Claim 1, **characterized in that** these hard material particles (7) with a diameter of 40 to 100 µm form at least 30% by area of the hard material coating (2) when seen in microsection.

3. Hard material coating according to Claim 1 or 2, **characterized in that** the hard material particles (7) with a diameter of 40 to 100 µm are uniformly distributed in the matrix material (8).

4. Hard material coating according to one of the preceding claims, **characterized in that** the hardness of the hard material particles (7) is greater than 1400 HV.

5. Hard material coating according to one of the preceding claims, **characterized in that** the hard material particles are carbides, nitrides, or oxides, preferably tungsten carbides.

6. Hard material coating according to one of the preceding claims, **characterized in that** the matrix material (8) has a hardness of 500 to 800 HV.

7. Hard material coating according to one of the preceding claims, **characterized in that** the matrix (8) contains nickel or cobalt or nickel-chromium-silicon compounds.

8. Hard material coating according to one of the preceding claims, **characterized in that** the required optimum thickness of the layer is dependent on the material to be cut, on the proportion and on the hardness of the hard material particles, the matrix hardness and the coating width which can be worn away, and in the case of choppers used for harvesting field crops is preferably:
- at least 0.1 to at most 0.2 mm for maize cutters,
- at least 0.3 to at most 0.5 mm for grass cutters and cutters for other plants used for silage,
- at least 0.6 to at most 1.5 mm for counter-cutters used to harvest maize.

9. Cutter or blade having a cutting edge which is provided with a hard material coating according to Claim 1.

10. Cutter or blade according to Claim 9, **characterized in that** the hard material particles (7) (with a diameter of 40 to 100 µm), which are preferably uniformly distributed in the matrix material (8), form at least 30% by area of the hard material coating (2), when seen in microsection, the hard material particles (7) preferably having a hardness of at least 1400 HV.

11. Cutter or blade according to Claim 9 or 10, **characterized in that** the hard material particles are carbides, nitrides or oxides, preferably tungsten carbides.

## Revendications

1. Revêtement en matériau dur pour des couteaux ou des lames, contenant des particules de matériau dur, **caractérisé en ce que** lesdites particules (7) de matériau dur ont un diamètre compris dans une plage allant de 40 à 100 *µ*m et sont noyées dans un matériau de matrice.

2. Revêtement en matériau dur selon la revendication 1, **caractérisé en ce que** la surface des particules (7) de matériau dur, de diamètre compris dans une plage allant de 40 à 100 *µ*m, dans une coupe polie du revêtement en matériau dur (2), représente au moins 30%.

3. Revêtement en matériau dur selon la revendication 1 ou 2, **caractérisé en ce que** les particules (7) de matériau dur, de diamètre compris dans une plage allant de 40 à 100 *µ*m, sont distribuées de manière homogène dans le matériau de matrice (8).

4. Revêtement en matériau dur selon une des revendications précédentes, **caractérisé en ce que** la dureté des particules (7) de matériau dur est supérieure à 1400 HV.

5. Revêtement en matériau dur selon une des revendications précédentes, **caractérisé en ce que** les particules de matériau dur sont des carbures, des nitrures ou des oxydes, de préférence des carbures de tungstène.

6. Revêtement en matériau dur selon une des revendications précédentes, **caractérisé en ce que** le matériau de matrice (8) a une dureté comprise dans une plage allant de 500 à 800 HV.

7. Revêtement en matériau dur selon une des revendications précédentes, **caractérisé en ce que** la matrice (8) contient du nickel ou du cobalt ou des composés nickel-chrome-silicium.

8. Revêtement en matériau dur selon une des revendications précédentes, **caractérisé en ce que** l'épaisseur nécessaire, optimale, de la couche de matériau coupant dépend de la quantité et de la dureté des particules de matériau dur, de la dureté de la matrice et de la largeur de revêtement utile et dans le cas de machines de coupe pour la récolte de produits agricoles est de préférence :
- d'au moins 0,1 à 0,2 mm maximum pour des couteaux à maïs
- d'au moins 0,3 à 0,5 mm maximum pour de l'herbe (et autres plantes d'ensilage),
- d'au moins 0,6 à 1,5 mm maximum pour des contre-lames pour la récolte de maïs.

9. Couteau ou lame comportant une arête coupante qui est pourvue d'un revêtement en matériau dur conformément à la revendication 1.

10. Couteau ou lame selon la revendication 9, **caractérisé en ce que** la surface des particules (7) de matériau dur (avec un diamètre de 40 à 100 *µ*m) réparties de préférence de manière uniforme dans le matériau de la matrice est d'au moins 30% dans la coupe polie du revêtement de matériau dur (2), les particules de matériau dur (7) ayant de préférence une dureté d'au moins 1400 HV.

11. Couteau ou lame selon la revendication 9 ou 10, **caractérisé en ce que** les particules de matériau dur sont des carbures, des nitrures ou des oxydes, de préférence des carbures de tungstène.
